# EUROPÄISCHE PATENTSCHRIFT

(11) **EP 2 676 537 B1**
(45) Veröffentlichungstag und Bekanntmachung des Hinweises auf die Patenterteilung: **31.08.2016**
(21) Anmeldenummer: 13003637.9
(22) Anmeldetag: 17.12.2010
(51) Int. Cl.: A01D 34/82

(54) **Handgeführtes Arbeitsgerät**
Manually operated work device
Appareil de travail manuel

(43) Veröffentlichungstag der Anmeldung: 25.12.2013
(62) Teilanmeldung aus: 10015773.4
(73) Patentinhaber: Viking GmbH, 6336 Langkampfen (AT)
(72) Erfinder: Vogler, Manfred, A-5020 Salzburg (AT); Lechner, Hubert, A-6341 Ebbs (AT); Buchauer, Siegfried, A-6334 Schwoich (AT); Elfner, Jörg, D-71397 Leutenbach (DE)
(74) Vertreter: Reinhardt, Annette

(56) Entgegenhaltungen:
- EP-A1- 1 342 401
- US-A- 4 422 283

## Beschreibung

Die Erfindung betrifft ein handgeführtes Arbeitsgerät der im Oberbegriff des Anspruchs 1 angegebenen Gattung (siehe EP-A-1342401).

Aus der DE 31 05 419 A1 ist ein handgeführtes Arbeitsgerät, nämlich ein Rasenmäher bekannt. Der Rasenmäher besitzt zum Führen auf dem Boden einen Grifflenker, der am hinteren Bereich des Gehäuses fixiert ist.

Es hat sich gezeigt, dass die Steifigkeit des Rasenmähergehäuses, insbesondere bei einschalig ausgeführten Gehäusen aus Kunststoff, bei der Krafteinleitung im hinteren Bereich des Gehäuses unzureichend sein kann.

Aus der EP 1 623 615 A1 ist ein Arbeitsgerät bekannt, das als Freischneider oder Kantenschneider einsetzbar ist. Das Führungsrohr des Arbeitsgeräts besitzt eine Teleskopeinrichtung zur Längenverstellung. Der äußere Abschnitt des Führungsrohrs ist am Grifflenker angeformt. Bei geöffneter Klemmeinrichtung kann der innere Abschnitt des Führungsrohrs aus dem äußeren Abschnitt des Führungsrohrs herausgezogen werden.

Aus der EP 1 902 608 A2 ist ein Rasenmäher bekannt, dessen Grifflenker am Gehäuse in unterschiedlichen Schwenkstellungen fixiert werden kann. Hierzu ist eine Kupplungseinrichtung vorgesehen, die über einen Betätigungsknopf gelöst oder fixiert werden kann. Der Erfindung liegt die Aufgabe zugrunde, ein handgeführtes Arbeitsgerät der gattungsgemäßen Art zu schaffen, das eine hohe Stabilität und einen einfachen Aufbau besitzt.

Diese Aufgabe wird durch ein handgeführtes Arbeitsgerät mit den Merkmalen des Anspruchs 1 gelöst.

Der Grifflenker besitzt eine Befestigungskonsole. Die Befestigungskonsole ist im hinteren Bereich des Gehäuses an dem Gehäuse festgelegt und mit der Versteifungsstrebe verbunden. Über die Befestigungskonsole kann auf einfache Weise eine stabile Anbindung des Grifflenkers an das Gehäuse und an die Versteifungsstrebe erfolgen. Das Führungsrohr ist mit mindestens einer lösbaren Klappeinrichtung mit der Befestigungskonsole verbunden. Dadurch kann das Führungsrohr zum Transport des Arbeitsgeräts umgeklappt werden. Ein einfacher Aufbau ergibt sich, wenn das Führungsrohr an der Klappeinrichtung geklemmt gehalten ist. Die Klappeinrichtung besitzt mindestens eine Klemmplatte, die in geklemmter Stellung der Klappeinrichtung formschlüssig an der Befestigungskonsole und an dem Führungsrohr angeordnet ist. Die formschlüssige Verbindung sowohl an der Befestigungskonsole als auch am Führungsrohr erlaubt eine formschlüssige Verbindung der beiden Elemente miteinander. Zum Ausgleich von Toleranzen und zur Vermeidung einer statischen Überbestimmung der Klemmverbindung ist vorgesehen, dass die Befestigungskonsole und/oder das Führungsrohr in geklemmter Stellung der Klappeinrichtung elastisch verformt ist. Die elastische Verformung wird durch entsprechende Gestaltung und durch die Eigenelastizität des Materials ermöglicht.

Die Verbindung des Grifflenkers mit einer Versteifungsstrebe des Gehäuses, die den hinteren Bereich des Gehäuses mit dem vorderen Bereich des Gehäuses verbindet, erlaubt eine verbesserte Krafteinleitung und Kraftverteilung. Die Bedienkräfte werden nicht nur im hinteren Bereich des Gehäuses, sondern über die Versteifungsstrebe auch in den vorderen Bereich des Gehäuses geleitet. Dadurch kann das Gehäuse leicht und insbesondere aus Kunststoff und einschalig ausgebildet sein. Dadurch ergibt sich ein einfacher Aufbau des Arbeitsgeräts.

Vorteilhaft ist die Versteifungsstrebe mit dem Grifflenker formschlüssig verbunden. Die formschlüssige Verbindung kann durch die Formgebung erfolgen, so dass keine zusätzlichen Befestigungsmittel oder dgl. benötigt werden. Vorteilhaft besteht die formschlüssige Verbindung lediglich in einer Richtung, nämlich in der Richtung, in der die Bedienkräfte üblicherweise eingeleitet werden.

Insbesondere sind zwei Versteifungsstreben vorgesehen, die mit einer die Versteifungsstreben verbindenden Abdeckung eine Motorhaube des Arbeitsgeräts bilden. Für die Versteifungsstreben wird demnach kein zusätzliches Bauteil benötigt, sondern die ohnehin vorhandene Motorhaube kann mit ihren in Längsrichtung verlaufenden Versteifungsrippen zur Abstützung und Einleitung der Bedienkräfte genutzt werden.

Die Befestigungskonsole kann dabei aus einem formstabilen Material wie Metall oder glasfaserverstärktem Kunststoff bestehen, so dass sich eine hohe Festigkeit ergibt. Insbesondere ist die Befestigungskonsole ein Aluminiumdruckgussteil. Insbesondere erstreckt sich die Befestigungskonsole über mehr als drei Viertel der Breite des Gehäuses. Die Befestigungskonsole ist dabei vorteilhaft benachbart zu den beiden Längsseiten des Arbeitsgeräts an dem Gehäuse festgelegt. Durch die Anbindung an beiden Längsseiten des Gehäuses ergibt sich eine gleichmäßige Krafteinleitung an beiden Gehäuseseiten. Zur symmetrischen Krafteinleitung ist insbesondere eine Fixierung an beiden Längsseiten des Gehäuses und eine Verbindung mit zwei symmetrisch zur Mitte des Rasenmähergehäuses angeordneten Versteifungsstreben vorgesehen.

Vorteilhaft ist der Grifflenker einarmig ausgebildet. Das Führungsrohr des Grifflenkers verläuft dabei insbesondere an einer Längsseite des Arbeitsgeräts. Dadurch wird die Zugänglichkeit zu dem Arbeitsgerät deutlich verbessert. Insbesondere bei der Ausbildung des Arbeitsgeräts als Rasenmäher wird die Zugänglichkeit zu einem in Fahrtrichtung zwischen Gehäuse und Griffabschnitt des Grifflenkers angeordneten Grasfangkorb deutlich verbessert.

Die Klemmkraft der Klappeinrichtung ist insbesondere einstellbar. Dadurch kann eine spielfreie Verbindung zwischen Befestigungskonsole und Führungsrohr erreicht werden. Hierzu ist insbesondere vorgesehen, dass die Klappeinrichtung eine Schraube umfasst, die an der einen Klemmplatte anliegt und durch die gegenüberliegende Klemmplatte, gegen die der Betätigungshebel wirkt, ragt, und die in den Lagerbolzen des Betätigungshebels eingeschraubt ist. Dadurch wird auf einfache Weise eine Nachstellung der Klemmeinrichtung ermöglicht. Die Einstellbarkeit erlaubt einen Ausgleich von Toleranzen sowie ein Nachstellen der Klappeinrichtung bei Verschleiß.

Insbesondere besitzt das Führungsrohr an seinem der Befestigungskonsole zugewandten Ende an gegenüberliegenden Seiten Vertiefungen für zwei Klemmplatten der Klappeinrichtung. Die Befestigungskonsole besitzt vorteilhaft zwei Arme, zwischen denen eine Aufnahme für das Lenkerunterteil des Führungsrohrs gebildet ist und an denen die Klemmplatten formschlüssig angeordnet sind. Dadurch ergibt sich eine einfache Gestaltung. Um zu vermeiden, dass das Führungsrohr sich unter Einwirkung der Klemmkraft und der Bedienkräfte verformt und dadurch eine Relativbewegung zwischen dem Führungsrohr und der Befestigungskonsole ermöglicht, ist vorgesehen, dass im Inneren des Führungsrohrs im Bereich der Klappeinrichtung ein Versteifungselement angeordnet ist. Das Versteifungselement ist vorteilhaft ein Spritzgussteil, das insbesondere aus Kunststoff besteht und das zur Erreichung eines geringen Gewichts bei hoher Festigkeit vorteilhaft eine Vielzahl von Versteifungsstreben besitzt.

Ein einfacher Aufbau ergibt sich, wenn der Grifflenker ein einteiliges Lenkeroberteil umfasst, das einen Kanal besitzt, der sich durch einen am Lenkeroberteil angeformten Abschnitt des Führungsrohrs und den am Lenkeroberteil ausgebildeten Griffabschnitt erstreckt. Der Kanal ermöglicht ein geringes Gewicht bei hoher Steifigkeit des Lenkeroberteils. Dadurch, dass sich der Kanal auch durch den Griffabschnitt erstreckt, ist das Gewicht und damit das auf den Rasenmäher ausgeübte Kippmoment verringert, so dass ein Umkippen des Rasenmähers auch bei vollständig gefülltem Grasfangkorb vermieden werden kann. Das Lenkeroberteil besteht dabei insbesondere aus Kunststoff. Der untere Abschnitt des Führungsrohrs besteht vorteilhaft aus Metall und ist insbesondere ein Aluminiumrohr. Die Befestigungskonsole besteht insbesondere aus Metall und ist vorteilhaft ein Aluminiumdruckgussteil.

Ein Ausführungsbeispiel der Erfindung wird im Folgenden anhand der Zeichnung erläutert. Es zeigen:
- Fig. 1: eine perspektivische Darstellung eines Rasenmähers,
- Fig. 2: den Grifflenker des Rasenmähers aus Fig. 1 in perspektivischer Darstellung,
- Fig. 3: eine Ansicht des Lenkeroberteils von unten,
- Fig. 4: eine ausschnittsweise Schnittdarstellung von Motorhaube und Befestigungskonsole im Bereich der Verbindung der beiden Teile,
- Fig. 5: eine perspektivische Darstellung der Teleskopeinrichtung des Grifflenkers,
- Fig. 6 und 7: Schnitte durch den Grifflenker aus Fig. 3,
- Fig. 8: einen Schnitt entlang der Linie VIII-VIII in Fig. 6,
- Fig. 9: eine perspektivische Darstellung von Führungsbuchse und innerem Abschnitt des Führungsrohrs mit am Anschlag anliegender Führungsbuchse,
- Fig. 10: eine perspektivische Darstellung der Anordnung aus Fig. 9 mit vom Anschlag weggeschobener Führungsbuchse,
- Fig. 11: eine perspektivische Darstellung der Klappeinrichtung,
- Fig. 12 und 13: Schnitte durch die Klappeinrichtung aus Fig. 11,
- Fig. 14: einen Schnitt entlang der Linie XIV-XIV in Fig. 13 und
- Fig. 15: eine perspektivische Darstellung des Versteifungselements.

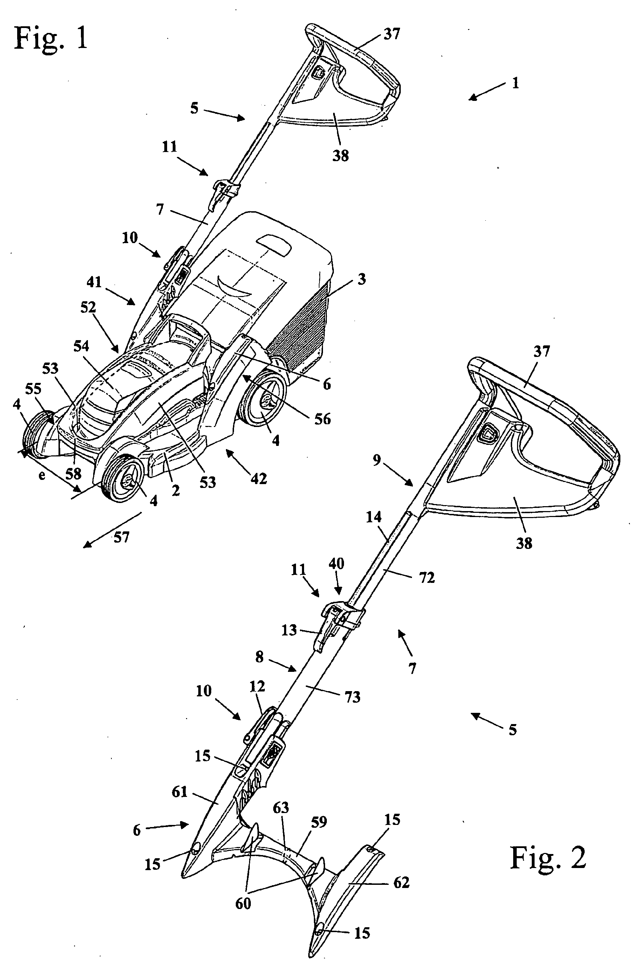

Fig. 1 zeigt als Ausführungsbeispiel für ein handgeführtes Arbeitsgerät einen Rasenmäher 1. Der Rasenmäher 1 besitzt ein Gehäuse 2, an dem vier Räder 4 gelagert sind. Die Räder 4 stehen auf dem Boden auf. Am Gehäuse 2 ist ein abnehmbarer Grasfangkorb 3 festgelegt, in den das geschnittene Schnittgut gefördert wird. Am Gehäuse 2 ist außerdem ein Grifflenker 5 festgelegt, der einen Griffabschnitt 37 besitzt, an dem der Bediener den Grifflenker 5 greifen und den Rasenmäher 1 über den Boden schieben kann.

Der Rasenmäher 1 besitzt eine erste Längsseite 41 und eine zweite Längsseite 42. Die Längsseiten 41 und 42 sind dabei die Seiten des Rasenmähers 1, die parallel zur Fahrtrichtung 57 liegen. Der Grifflenker 5 ist einarmig ausgebildet. Er besitzt ein einziges Führungsrohr 7, das mit einer Befestigungskonsole 6 an einem hinteren Bereich 56 des Gehäuses 2 des Rasenmähers 1 fixiert ist. Das Führungsrohr 7 verläuft an der ersten Längsseite 41 des Rasenmähers 1 benachbart zum Grasfangkorb 3. Von der gegenüberliegenden, zweiten Längsseite 42 ist der Grasfangkorb 3 frei zugänglich.

Der hintere Bereich 56 des Gehäuses 2 ist der in Fahrtrichtung 57 hinten liegende, dem Grasfangkorb 3 zugewandte Bereich. Das Gehäuse 2 besitzt außerdem einen vorderen Bereich 55, der sich benachbart zu den Vorderrädern erstreckt. Am Gehäuse 2 ist ein nicht gezeigter Antriebsmotor angeordnet, der insbesondere ein elektrischer Motor ist. Der Antriebsmotor ist unter einer Motorhaube 52 angeordnet, die am Gehäuse 2 festgelegt ist. Die Motorhaube 52 besitzt zwei in Längsrichtung des Gehäuses 2, also in Fahrtrichtung 57 verlaufende, seitliche Versteifungsstreben 53. Die Versteifungsstreben 53 erstrecken sich benachbart zu den Längsseiten 41 und 42 des Rasenmähers 1. Die beiden Versteifungsstreben 53 sind im vorderen Bereich 55 über eine Verbindung 58 miteinander verbunden und im vorderen Bereich am Gehäuse 2 festgelegt. Die Motorhaube 52 ist fest mit dem Gehäuse 2 verbunden, insbesondere durch Verschrauben. Zwischen den beiden Versteifungsstreben 53 erstreckt sich eine Abdeckung 54, die den Antriebsmotor abdeckt. Die beiden Versteifungsstreben 53 sind im Querschnitt etwa U-förmig ausgebildet und bilden zusammen mit der Abdeckung 54 die einteilige Motorhaube 52. Die Motorhaube 52 kann auch mehrteilig ausgebildet sein.

Das Motorgehäuse 2 besitzt eine quer zur Fahrtrichtung gemessene Breite e. Wie Fig. 1 zeigt, erstreckt sich die Befestigungskonsole 6 über die gesamte Breite e des Gehäuses 2. Vorteilhaft erstreckt sich die Befestigungskonsole 6 mindestens über 2/3 der Breite e.

Das Führungsrohr 7 besitzt eine Klappeinrichtung 10, so dass der Grifflenker 5 nach vorne auf das Gehäuse 2 abgeklappt werden kann. Dadurch kann der Rasenmäher 1 einfacher transportiert werden. Außerdem besitzt der Grifflenker 5 eine Teleskopeinrichtung 11, die eine Verstellung der Länge des Führungsrohrs 7 erlaubt. Dadurch kann die Höhe des Griffabschnitts 37 an den Benutzer angepasst werden. Benachbart zum Griffabschnitt 37 besitzt der Grifflenker 5 eine Griffplatte 38, an der Bedienelemente des Rasenmähers 1 angeordnet sein können.

Fig. 2 zeigt die Gestaltung des Grifflenkers 5 im Einzelnen. Die Befestigungskonsole 6 besteht aus Aluminiumdruckguss und ist als Formteil ausgebildet. Die Befestigungskonsole 6 kann jedoch auch aus einem anderen Material hoher Festigkeit wie beispielsweise aus glasfaserverstärktem Kunststoff bestehen. Sie besitzt insgesamt vier Befestigungsöffnungen 15 für Befestigungsschrauben, wobei jeweils zwei Befestigungsöffnungen 15 an jeder Längsseite 41, 42 des Rasenmähers 1 angeordnet sind. Die an jeder Längsseite 41, 42 angeordneten beiden Befestigungsöffnungen 15 besitzen in Fahrtrichtung 57 zueinander einen Abstand. Dadurch ergibt sich eine etwa H-förmige Gestalt der Befestigungskonsole 6. Dadurch kann eine gute Krafteinleitung in das Gehäuse 2 erreicht werden. Die Befestigungskonsole 6 besitzt zwei Längsholme 61 und 62, die sich etwa in Fahrtrichtung 57 an den Längsseiten 41 und 42 erstrecken und an denen jeweils zwei Befestigungsöffnungen 15 angeordnet sind. Die beiden Längsholme 61 und 62 sind über einen Querholm 59 miteinander verbunden, der quer zur Fahrtrichtung angeordnet ist. Der Querholm 59 besitzt Abstützungen 60, deren Funktion im Folgenden noch näher erläutert wird. Es kann auch vorgesehen sein, dass die Befestigungskonsole 6 nur einen Längsholm 61 aufweist, und dass der Querholm 59 stark verkürzt ausgebildet ist. Den verkürzten Querholm 59 zeigt die gestrichelte Linie 63 in Fig. 2 schematisch. Bei dieser Gestaltung erstreckt sich die Befestigungskonsole 6 nur über etwa die Hälfte der Breite e des Gehäuses 2.

Mit den nicht gezeigten Befestigungsschrauben ist die Befestigungskonsole 6 am Gehäuse 2 fixiert. Das Führungsrohr 7 besitzt ein Lenkerunterteil 8 und ein Lenkeroberteil 9. Das Lenkerunterteil 8 umfasst einen äußeren Abschnitt 73 des Führungsrohrs 7. Der äußere Abschnitt 73 des Führungsrohrs 7 besteht vorteilhaft aus Metall. Im Ausführungsbeispiel ist der äußere Abschnitt 73 als Aluminiumrohr ausgebildet und über die Klappeinrichtung 10 an der Befestigungskonsole 6 festgelegt. Zum Lösen besitzt die Klappeinrichtung 10 einen Betätigungshebel 12. Das Lenkerunterteil 8 ist mit dem Lenkeroberteil 9 über die Teleskopeinrichtung 11 verbunden. Die Teleskopeinrichtung 11 besitzt eine Klemmeinrichtung 40 zur Fixierung der beiden Lenkerteile 8 und 9 gegeneinander. Zum Klemmen und Lösen ist ein Betätigungshebel 13 vorgesehen. Das Lenkeroberteil 9 umfasst einen inneren Abschnitt 72 des Führungsrohrs 7, den Griffabschnitt 37 und die Griffplatte 38 und besteht aus Kunststoff. Vorteilhaft ist der innere Abschnitt 72 mit dem Griffabschnitt 37 und der Griffplatte 38 einteilig und teilweise als Hohlteil in einem Fluidinnendruckverfahren hergestellt. Das Lenkeroberteil 9 kann jedoch auch mehrteilig ausgebildet sein. Wie Fig. 2 auch zeigt, besitzt der innere Abschnitt 72 eine Längsnut 14, deren Funktion im Folgenden noch näher erläutert wird.

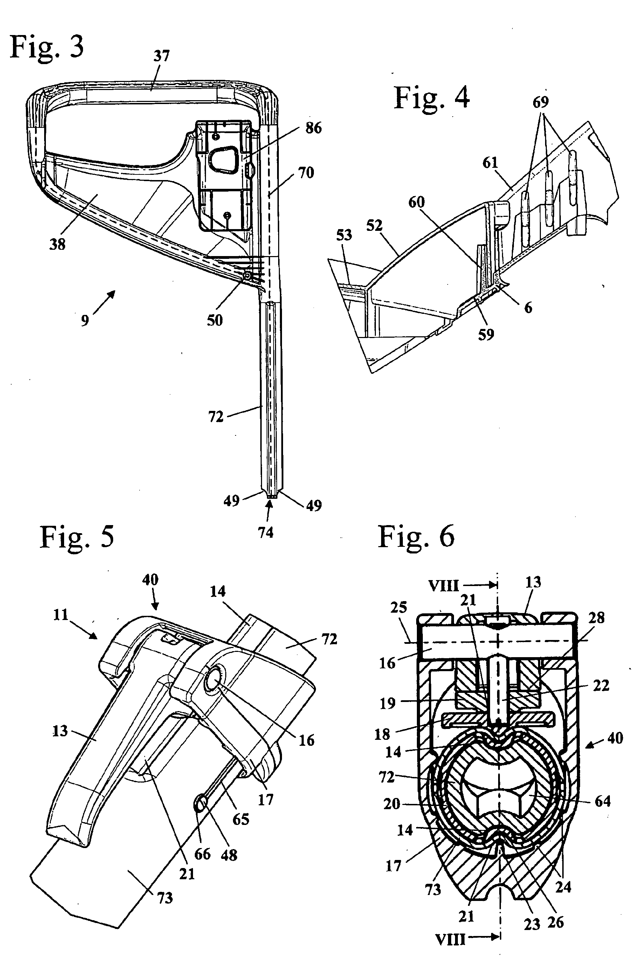

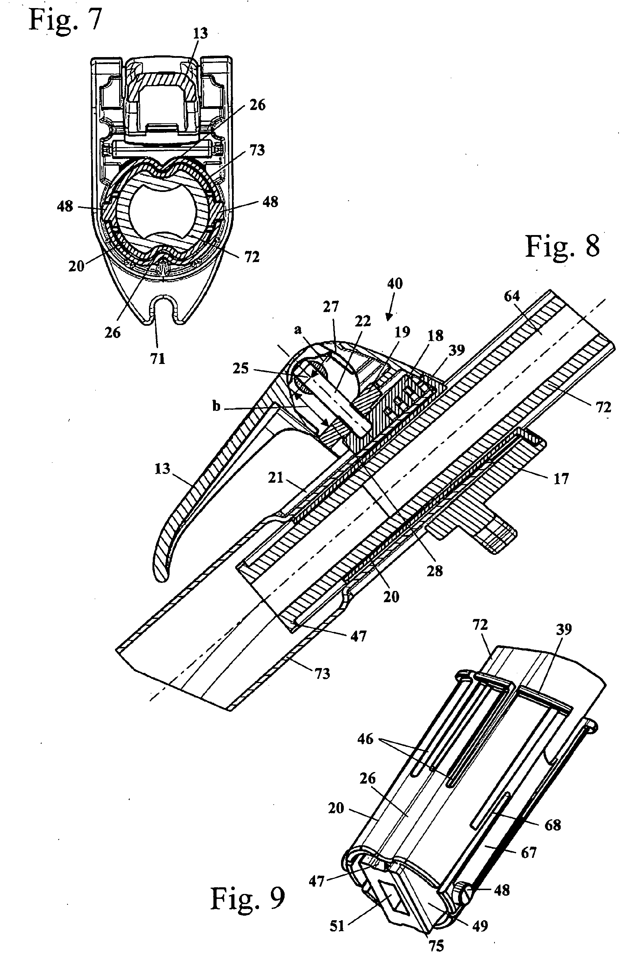

Fig. 3 zeigt die Gestaltung des Lenkeroberteils 9 im Einzelnen. Die an der Aufnahme 86 für die Bedienelemente am Lenkeroberteil 9 lösbar angeordnete Abdeckung ist dabei in Fig. 3 nicht gezeigt. Das Lenkeroberteil 9 besitzt einen in Fig. 6 gezeigten Kanal 64, der sich durch den inneren Abschnitt 72, den Griffabschnitt 37 sowie an der Außenseite der Griffplatte 38 entlang zurück bis zum inneren Abschnitt 72 erstreckt. Der Verlauf des Kanals 64 ist in Fig. 3 durch die gestrichelte Linie 70 angedeutet. Benachbart zum Griffabschnitt 37 ist eine Öffnung 50 am Kanal 64 vorgesehen, durch die ein Fluid wie Wasser oder ein Gas bei der Herstellung des Lenkeroberteils 8 in den Kanal 64 eintreten und diesen ausformen kann. An seinem dem Griffabschnitt 37 abgewandten Ende 74 besitzt der innere Abschnitt 72 des Führungsrohrs 7 die in Fig. 9 gezeigte Öffnung 51. Über die Öffnung 51 kann das Fluid austreten. Dadurch kann das Lenkeroberteil 9 mit hoher Festigkeit und geringem Gewicht in einem Fluidinnendruckverfahren spritzgegossen werden.

Fig. 4 zeigt die Verbindung von Befestigungskonsole 6 und Motorhaube 52 im Einzelnen. Die Abstützungen 60 liegen an einem Wandabschnitt der Motorhaube 52 an und bilden dadurch eine formschlüssige Verbindung zwischen dem Führungsrohr 7 und den Versteifungsstreben 53. Die Abstützungen 60 sind dabei vorteilhaft benachbart zu den Versteifungsstreben 53 angeordnet, so dass sich eine gute Krafteinleitung ergibt.

Wie Fig. 4 auch zeigt, sind am ersten Längsholm 61 Kabelführungen 69 angeformt, die hakenförmig ausgebildet sind und in die ein Verbindungskabel zur Verbindung des Antriebsmotors mit an der Griffplatte 38 angeordneten Bedienelementen angeordnet werden kann. Separate Elemente zur Kabelführung können dadurch entfallen.

Die Fig. 5 bis 10 zeigen die Gestaltung der Teleskopeinrichtung 11 im Einzelnen. Die Teleskopeinrichtung 11 umfasst eine Klemmhülse 17, die Teil der Klemmeinrichtung 40 ist. An der Klemmhülse 17 ist der Betätigungshebel 13 mit einem Lagerbolzen 16 schwenkbar gelagert. Der innere Abschnitt 72 des Führungsrohrs 7 ist im Außendurchmesser kleiner ausgebildet als der äußere Abschnitt 73 und ragt in den äußeren Abschnitt 73. Auch der äußere Abschnitt 73 besitzt eine Längsnut 21.

Wie Fig. 6 zeigt, sind jeweils auf gegenüberliegenden Seiten des Führungsrohrs 7 zwei Längsnuten 14 im inneren Abschnitt 72 und zwei Längsnuten 21 im äußeren Abschnitt 73 ausgebildet. In radialer Richtung zwischen den beiden Abschnitten 72 und 73 ist die auch in den Fig. 8 bis 10 gezeigte Führungsbuchse 20 angeordnet. Die beiden Abschnitte 72 und 73 greifen mit ihren Längsnuten 14 und 21 ineinander bzw. in die Führungsbuchse 20 und bilden so eine in Umfangsrichtung formschlüssige Fixierung. Dadurch können die beiden Abschnitte 72 und 73 nicht gegeneinander verdreht werden.

Die Fig. 5 bis 8 zeigen den Betätigungshebel 13 in fixierter Stellung der Klemmeinrichtung 40. Der Betätigungshebel 13 ist um eine Schwenkachse 25 schwenkbar gelagert. Der Betätigungshebel 13 besitzt eine erste Anlagefläche 27, die zur Schwenkachse 25 einen ersten Abstand a besitzt und eine zweite Anlagefläche 28, die zur Schwenkachse 25 einen zweiten, größeren Abstand b besitzt. In der fixierten Stellung wirkt der Betätigungshebel 13 über die zweite Anlagefläche 28 auf eine Einstellmutter 19. Die Einstellmutter 19 ist in ein Außengewinde eines Spannbolzens 22 eingeschraubt, der durch den Lagerbolzen 16 ragt und gegenüber dem Lagerbolzen 16 verschiebbar ist. Der Spannbolzen 22 wirkt auf ein Klemmstück 18, das in die Nut 21 des äußeren Abschnitts 73 drückt. Wird die Einstellmutter 19 vom Klemmstück 18 weggeschraubt, so vergrößert sich der Abstand zwischen Klemmstück 18 und Einstellmutter 19. Dadurch wird die Klemmkraft vergrößert. Dadurch, dass der Lagerbolzen 16 in der Klemmhülse 17 gelagert ist, drückt die Klemmeinrichtung 40 die Klemmhülse 17 und das Klemmstück 18 von gegenüberliegenden Seiten gegen den Außenumfang des äußeren Abschnitts 73. Wie Fig. 6 zeigt, besitzt die Klemmhülse 17 an ihrem Innenumfang mehrere Klemmrippen 24, die auf das Führungsrohr 7 wirken. Im Bereich der dem Klemmstück 18 gegenüberliegenden Längsnut 21 ist eine Führungsrippe 23 angeordnet, die zum Einen zur Lagesicherung in Umfangsrichtung und zum Anderen zum Ausüben der Klemmkraft dient.

Wie Fig. 6 zeigt, besitzt auch die Lagerhülse 20 zwei in Längsrichtung verlaufende Längsnuten 26. Der Innenbereich jeder Vertiefung 21 und 26 des äußeren Abschnitts 73 und der Führungsbuchse 20 greifen jeweils in die zugeordnete Längsnut 26, 14 der Führungsbuchse 20 und des inneren Abschnitts 72, um so eine verdrehsichere Verbindung der beiden Abschnitte zu bewirken.

Wie Fig. 5 zeigt, besitzt der äußere Abschnitt 73 des Führungsrohrs 7 im Bereich der Teleskopeinrichtung 11 Schlitze 65, die sich von der Stirnseite des äußeren Abschnitts 73 über eine Länge erstrecken, die etwa der Länge der Führungsbuchse 20 entspricht. Es sind zwei einander gegenüberliegend angeordnete Schlitze 65 vorgesehen, von denen in Fig. 5 einer gezeigt ist. Am Ende jedes Schlitzes 65 ist eine kreisförmige Öffnung 66 ausgebildet, deren Durchmesser größer als die Breite des Schlitzes 65 ist und in die ein an der Führungsbuchse 20 ausgebildeter Zapfen 48 ragt. Dies ist auch in Fig. 7 gezeigt. Aufgrund der Zapfen 48 ist die Führungsbuchse 20 in dem äußeren Abschnitt 73 des Führungsrohrs 7 in ihrer Lage fixiert. Ein axiales Verschieben der Führungsbuchse 20 gegenüber dem äußeren Abschnitt 73 ist nicht möglich.

Wie Fig. 7 zeigt, ist an der Teleskopeinrichtung 11 eine Kabelführung 71 integriert, in die ein Verbindungskabel zwischen am Griff angeordneten Bedienelementen und dem Antriebsmotor eingeklipst werden kann. Durch die einteilige Ausbildung mit der Klemmhülse 17 werden für die Kabelführung 71 keine zusätzlichen Bauteile benötigt.

Wie Fig. 8 zeigt, besitzt die Führungsbuchse 20 einen Rand 39, der an einer Stirnseite der Klemmhülse 17 anliegt. Die Führungsbuchse 20 ist im Ausführungsbeispiel leicht konisch ausgebildet. Der innere Bereich der Führungsbuchse 20 liegt am inneren Abschnitt 72 an und der äußere Bereich am äußeren Abschnitt 73. Durch die konische Form der Führungsbuchse 20 kann die Führungsbuchse 20 bei der Herstellung im Kunststoffspritzguss leicht entformt werden. Wie Fig. 8 auch zeigt, ist die Einstellmutter 19 von dem benachbart zum Führungsrohr 7 liegenden, in geklemmtem Zustand unterhalb des Betätigungshebels 13 angeordneten Bereich aus zugänglich. Wird der Betätigungshebel 13 um die Schwenkachse 25 verschwenkt, so kommt die erste Anlagefläche 27 zur Anlage an die Einstellmutter 19. Aufgrund des kleineren ersten Abstands a liegen das Klemmstück 18 und die Klemmhülse 17 in diesem Zustand nur lose am Führungsrohr 7 an, so dass die beiden Abschnitte 72 und 73 gegeneinander verschoben werden können.

Wie Fig. 8 zeigt, besitzt der innere Abschnitt 72 des Führungsrohrs 7 an seinem in den äußeren Abschnitt 73 ragenden Ende einen radial nach außen gerichteten Absatz 47. Wie Fig. 9 zeigt, bildet der Absatz 47 mit dem unteren Rand der Führungsbuchse 20 einen Anschlag 75, der ein weiteres Herausziehen des inneren Abschnitts 72 aus dem äußeren Abschnitt 73 verhindert. Der Absatz 47 ist im Bereich der Längsnut 26 angeordnet, die als in Längsrichtung verlaufende Vertiefung in der Führungsbuchse 20 ausgebildet ist.

Wie Fig. 9 zeigt, besitzt die Führungsbuchse 20 mehrere Längsschlitze 46, die sich vom Rand 39 bis in einen mittleren Bereich der Führungsbuchse 20 erstrecken. Die Längsschlitze 46 erhöhen die Elastizität der Führungsbuchse 20 in radialer Richtung, so dass die Führungsbuchse 20 zur Klemmung gut zusammengedrückt werden kann. Wie Fig. 9 auch zeigt, ist der Zapfen 48 am freien Ende eines Arms 67 angeordnet, der durch Schlitze 68 vom umgebenden Bereich der Führungsbuchse 20 getrennt ist. Der Arm 67 ist aufgrund seiner Länge und aufgrund der Eigenelastizität des Materials der Führungsbuchse, insbesondere des Kunststoffs, elastisch. Wie Fig. 9 zeigt, besitzt der innere Abschnitt 72 an seinem freien Ende jeweils benachbart zu den Zapfen 48 Vertiefungen 49. Die Vertiefungen 49 erlauben in vollständig nach außen gezogener Stellung des inneren Abschnitts 72, wie sie in Fig. 9 gezeigt ist, ein Drücken der Zapfen 48 nach innen aus den in Fig. 5 gezeigten Öffnungen 66. Dadurch kann die Verrastung gelöst werden.

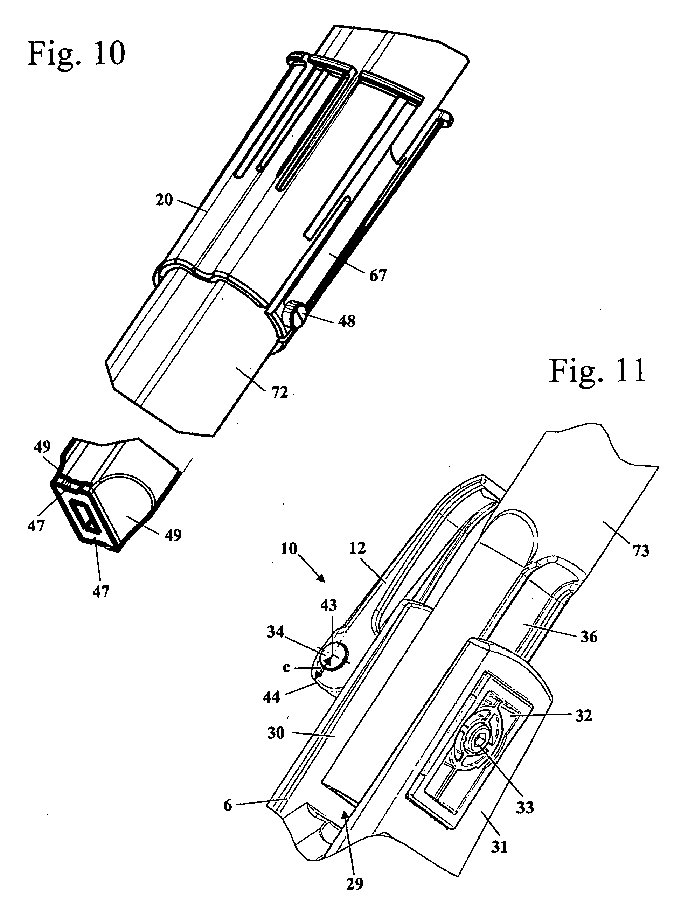

Fig. 10 zeigt die Führungsbuchse 20 mit dem inneren Abschnitt 72 in nicht vollständig ausgezogener Stellung. Die Führungsbuchse 20 liegt in einem mittleren Bereich des inneren Abschnitts 72 an. Die Arme 67 liegen an der Außenwand des Führungsrohrs 7 an und können nicht nach innen verschwenkt werden. Diese Stellung ist auch in Fig. 7 gezeigt. Dadurch kann die Verrastung zwischen Führungsbuchse 20 und äußerem Abschnitt 73 bei der in den Figuren 7 und 10 gezeigten Stellung des inneren Abschnitts 72 des Führungsrohrs 7 nicht gelöst werden.

Die Fig. 11 bis 14 zeigen die Klappeinrichtung 10 im Einzelnen. Der Betätigungshebel 12 der Klappeinrichtung 10 ist an einem Lagerbolzen 34 um eine Schwenkachse 43 schwenkbar gelagert. Wie die Fig. 11 bis 13 zeigen, sind am Betätigungshebel 12 zwei Anlageflächen 44 und 45 ausgebildet, die einen unterschiedlichen Abstand zur Schwenkachse 43 haben. Auch der Betätigungshebel 12 ist damit exzentrisch gelagert. Zur ersten Anlagefläche 44 besitzt die Schwenkachse 43 einen ersten Abstand c und zur Anlagefläche 45 einen zweiten, größeren Abstand d.

Wie Fig. 11 zeigt, wirkt der Betätigungshebel 12 gegen eine Scheibe 35, die an einer Klemmplatte 32 angeordnet ist. Die Klemmplatte 32 ist an einem ersten Arm 30 der Befestigungskonsole 6 angeordnet. An der gegenüberliegenden Seite des äußeren Abschnitts 73 des Führungsrohrs 7 ist ein zweiter Arm 31 angeordnet. Zwischen den beiden Armen 30 und 31 ist eine Aufnahme 29 für das Führungsrohr 7 gebildet. Die beiden Arme 30 und 31 sind so ausgebildet, dass sie aufgrund der Eigenelastizität des Materials elastisch sind und verformt werden können. Auch am zweiten Arm 31 ist eine Klemmplatte 32 angeordnet. Beide Klemmplatten 32 sind ebenso wie das Führungsrohr 7 von einer Schraube 33 durchragt, die in den Lagerbolzen 34 eingeschraubt ist. Durch Verstellung der Schraube 33 kann die Klemmkraft der Klappeinrichtung 10 eingestellt werden.

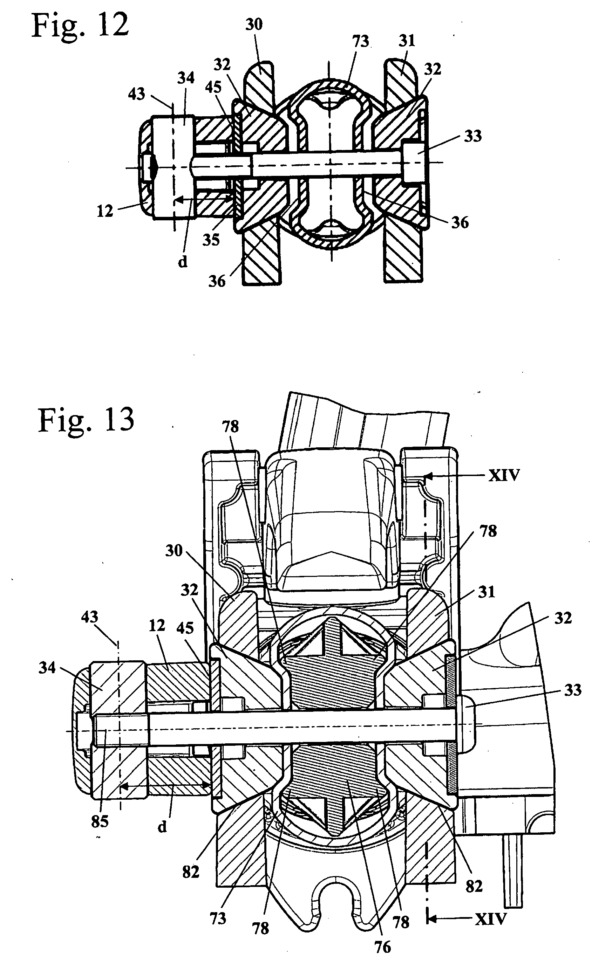

Der äußere Abschnitt 73 des Führungsrohrs 7 besitzt an den beiden den Armen 30 und 31 zugewandten Seiten jeweils eine Vertiefung 36. Die Seitenwände der Vertiefung 36 sind aufeinander zu geneigt. Die Klemmplatten 32 sind im Querschnitt an die Vertiefungen 36 angepasst. Die Klemmplatten 32 besitzen eine annähernd trapezförmige Querschnittsform. Durch die etwa rechteckige Gestalt der Klemmplatten 32 und den trapezförmigen Querschnitt wird eine formschlüssige Fixierung des unteren Abschnitts des Führungsrohrs 7 erreicht. Durch die geneigte Anordnung der Längswände der Klemmplatten 32 ergibt sich außerdem eine automatische Zentrierung der Klemmplatten 32 in den Vertiefungen 36. In Fig. 12 ist der Betätigungshebel 12 in klemmender Stellung angeordnet. Die Schraube 33 ist allerdings nicht weit genug in den Lagerbolzen 34 eingeschraubt, so dass sich Spiel zwischen den Klemmplatten 32 und dem unteren Abschnitt 8 des Führungsrohrs 7 ergibt. Zur Einstellung wird die Schraube 33 so weit angezogen, bis die Klemmplatten 32 fest und formschlüssig in den Vertiefungen 36 angeordnet sind. Dabei werden die Arme 30 und 31 geringfügig elastisch verformt. Beim Lösen des Betätigungshebels 12 werden die Klemmplatten 32 aufgrund der Elastizität der Arme 30 und 31 nach außen gedrückt, und das Führungsrohr 7 kann umgeklappt werden. Wie die Figuren 12 und 13 zeigen, kann das Führungsrohr 7 bei gelöster Klemmeinrichtung um eine Schwenkachse 85 verschwenkt werden, die mit der Achse der Schraube 33 zusammenfällt.

Fig. 13 zeigt die Klappeinrichtung 10 in geklemmter Stellung, wobei die Schraube 33 so weit eingeschraubt ist, dass sich eine formschlüssige, spielfreie Fixierung des Führungsrohrs 7 an der Befestigungskonsole 6 ergibt. In dieser Stellung sind die Arme 30 und 31 aufeinander zu elastisch verformt. Die Klemmplatten 32 liegen formschlüssig in Öffnungen 82 der Arme 30 und 31. Die Klemmplatten 32 liegen außerdem formschlüssig zwischen den geneigten Seitenwänden der Vertiefungen 36 am Führungsrohr 7 an. Im Inneren des äußeren Abschnitts 73 des Führungsrohrs 7 ist ein Versteifungselement 76 angeordnet. Das Versteifungselement 76 besitzt vier Längsstreben 78, die jeweils an den die Vertiefungen 36 begrenzenden, schräg verlaufenden Wänden des äußeren Abschnitts 73 des Führungsrohrs 7 anliegen und diese unterstützen und so die Klemmkraft aufnehmen.

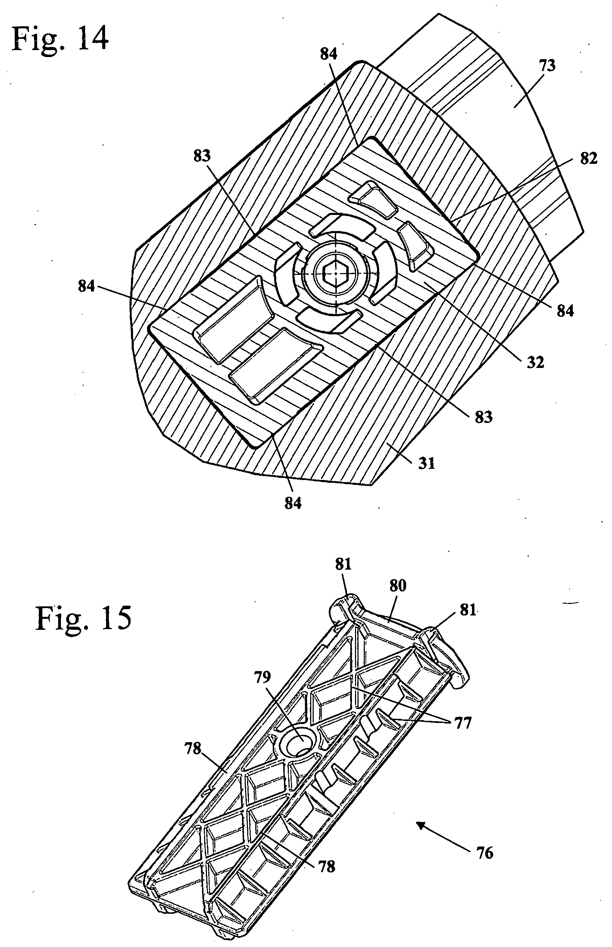

Fig. 14 zeigt einen Schnitt durch den Arm 31 mit in der Öffnung 82 angeordneter Klemmplatte 32. Wie Fig. 14 zeigt, verlaufen die in Längsrichtung der Klemmplatte 32 und des Arms 31 verlaufenden Seitenwände 83 leicht konkav und ins Innere der Klemmplatte 32 gewölbt. Dadurch liegt die Klemmplatte 32 nur in den Endbereichen 84 der Seitenwände 83 an der Öffnung 82 an. Durch die Anlage an den Endbereichen 84 kann eine formschlüssige, spielfreie Fixierung sichergestellt werden.

Fig. 15 zeigt die Gestaltung des Versteifungselements 76 im Einzelnen. Das Versteifungselement 76 besteht aus Kunststoff und wurde in einem Spritzgussverfahren hergestellt. Das Versteifungselement 76 besitzt eine Vielzahl von Versteifungsstreben 77, die sich zwischen den Längsstreben 78 und außerhalb der Längsstreben 78 erstrecken. Etwa mittig besitzt das Versteifungselement 76 eine Öffnung 79 für die Schraube 33. Das Versteifungselement 76 wird in den äußeren Abschnitt 73 des Führungsrohrs 7 von unten eingeschoben und verschließt den äußeren Abschnitt 73. Hierzu besitzt das Versteifungselement 76 eine Abdeckkappe 80. Um einen Austritt von im Führungsrohr 7 angesammelter Flüssigkeit zu erlauben, sind an der Abdeckkappe 80 zwei Kanäle 81 vorgesehen, die nach außen öffnen und über die eventuell angesammelte Flüssigkeit ablaufen kann.

Im Ausführungsbeispiel sind die Klemmplatten 32 im Querschnitt trapezförmig ausgebildet. Es könnte jedoch auch ein gewölbter, beispielsweise ein ovaler Querschnitt vorteilhaft sein.

## Patentansprüche

1. Handgeführte Arbeitsgerät wie Rasenmäher oder dgl., mit einem Gehäuse (2), an dem mehrere Räder (4) gelagert sind, und mit einem an dem Gehäuse (2) festgelegten Grifflenker (5) zum Führen des Arbeitsgeräts auf dem Boden, wobei der Grifflenker (5) an einem in Fahrtrichtung (57) hinteren Bereich (56) des Gehäuses (2) an dem Gehäuse (2) festgelegt ist, und wobei der Grifflenker (5) ein Führungsrohr (7) umfasst, wobei das Gehäuse (2) mindestens eine Versteifungsstrebe (53) besitzt, die sich von dem hinteren Bereich (56) des Gehäuses (2) zu einem vorderen Bereich (55) des Gehäuses (2) erstreckt, und wobei der Grifflenker (5) mit der Versteifungsstrebe (53) verbunden ist,
**dadurch gekennzeichnet, dass** der Grifflenker (5) eine Befestigungskonsole (6) besitzt, die im hinteren Bereich (56) des Gehäuses (2) an dem Gehäuse (2) festgelegt ist und die mit der Versteifungsstrebe (53) verbunden ist, wobei das Führungsrohr (7) über mindestens eine lösbare Klappeinrichtung (10) mit der Befestigungskonsole (6) verbunden ist, wobei das Führungsrohr (7) an der Klappeinrichtung (10) formschlüssig geklemmt gehalten ist und wobei die Klappeinrichtung (10) mindestens eine Klemmplatte (32) besitzt, die in geklemmter Stellung der Klappeinrichtung (10) formschlüssig an der Befestigungskonsole (6) und am Führungsrohr (7) angeordnet ist, wobei die Befestigungskonsole (6) und/oder das Führungsrohr (7) elastisch verformt ist.

2. Arbeitsgerät nach Anspruch 1,
**dadurch gekennzeichnet, dass** die Versteifungsstrebe (53) mit dem Grifflenker (5) formschlüssig verbunden ist.

3. Arbeitsgerät nach Anspruch 1 oder 2,
**dadurch gekennzeichnet, dass** zwei Versteifungsstreben (53) vorgesehen sind, die mit einer die Versteifungsstreben (53) verbindenden Abdeckung (54) eine Motorhaube (52) des Arbeitsgeräts bilden.

4. Arbeitsgerät nach einem der Ansprüche 1 bis 3,
**dadurch gekennzeichnet, dass** die Befestigungskonsole (6) sich über mehr als drei Viertel der Breite (e) des Gehäuses (2) erstreckt und benachbart zu beiden Längsseiten (41,42) des Arbeitsgeräts an dem Gehäuse (2) festgelegt ist.

5. Arbeitsgerät nach einem der Ansprüche 1 bis 4,
**dadurch gekennzeichnet, dass** der Grifflenker (5) einarmig ausgebildet ist, wobei das Führungsrohr (7) des Grifflenkers (5) an einer ersten Längsseite (41) des Arbeitsgeräts verläuft.

6. Arbeitsgerät nach einem der Ansprüche 1 bis 5,
**dadurch gekennzeichnet, dass** die Klemmkraft der Klappeinrichtung (10) einstellbar ist.

7. Arbeitsgerät nach einem der Ansprüche 1 bis 6,
**dadurch gekennzeichnet, dass** das Führungsrohr (7) an seinem der Befestigungskonsole (6) zugewandten Ende an gegenüberliegenden Seiten Vertiefungen (36) für zwei Klemmplatten (32) der Klappeinrichtung (10) besitzt, dass die Befestigungskonsole (6) zwei Arme (30, 31) besitzt, zwischen denen eine Aufnahme (29) für das Lenkerunterteil (8) des Führungsrohrs (7) gebildet ist und an denen die Klemmplatten (32) formschlüssig angeordnet sind, und dass im Inneren des Führungsrohrs (7) im Bereich der Klappeinrichtung (10) insbesondere ein Versteifungselement (76) angeordnet ist.

8. Arbeitsgerät nach einem der Ansprüche 1 bis 7,
**dadurch gekennzeichnet, dass** der Grifflenker (5) ein einteiliges Lenkeroberteil (9) umfasst, wobei das Lenkeroberteil (9) einen Kanal (64) besitzt, der sich durch einen am Lenkeroberteil (9) angeformten Abschnitt des Führungsrohrs (7) und den am Lenkeroberteil (9) ausgebildeten Griffabschnitt (37) erstreckt, wobei das Lenkeroberteil (9) insbesondere aus Kunststoff besteht.

## Claims

1. Hand-guided working implement, e.g. lawnmower or the like, comprising a housing (2) on which several wheels (4) are bearing-mounted and a steering handle (5) for guiding the working implement on the ground, wherein the steering handle (5) is located on the housing (2) in a rear region (56) of the housing (2) as viewed in the direction of travel (57) and wherein the steering handle (5) comprises a guide tube (7), wherein the housing (2) has at least one stiffening strut (53) extending from a rear region (56) of the housing (2) to a front region (55) of the housing (2), and wherein the steering handle (5) is joined to the stiffening strut (53),
**characterised in that** the steering handle (5) has a mounting console (6), which is located in the rear region (56) of the housing (2) and joined to the stiffening strut (53), wherein the guide tube (7) is joined to the mounting console (6) via at least one releasable snap device (10), wherein the guide tube (7) is positively clamped to the snap device (10) and wherein the snap device (10) has at least one clamping plate (32), which is positively located on the mounting console (6) and on the guide tube (5) in the clamped position of the snap device (10), wherein the mounting console (6) and/or the guide tube (5) is/are deformed elastically.

2. Working implement according to claim 1,
**characterised in that** the stiffening strut (53) is positively joined to the steering handle (5).

3. Working implement according to claim 1 or 2,
**characterised in that** two stiffening struts (53) are provided, which form, together with a cover (54) connecting the stiffening struts (53), an engine cover (52) of the working implement.

4. Working implement according to any of claims 1 to 3,
**characterised in that** the mounting console (6) extends across more than three fourths of the width (e) of the housing (2) and is located on the housing (2) adjacent to the two long sides (41, 42) of the working implement.

5. Working implement according to any of claims 1 to 4,
**characterised in that** the steering handle (5) is of a single-arm design, the guide tube (7) of the steering handle (5) extending along a first long side (41) of the working implement.

6. Working implement according to any of claims 1 to 5,
**characterised in that** the clamping force of the snap device (10) is adjustable.

7. Working implement according to any of claims 1 to 6,
**characterised in that** the guide tube (7) has recesses (36) for two clamping plates (32) of the snap device (10) on opposite sides at the end facing the mounting console (6), **in that** the mounting console (6) has two arms (30, 31), between which a receptacle (29) for the bottom part (8) of the guide tube (7) is formed and on which the clamping plates (32) are positively located, and **in that** a stiffening element (76) is in particular located in the interior of the guide tube (7) in the region of the snap device (10).

8. Working implement according to any of claims 1 to 7,
**characterised in that** the steering handle (5) comprises a single-piece steering handle upper part (9), the upper part (9) having a passage (64) which extends through a section of the guide tube (7) formed integrally with the steering handle upper part (9) and through the handle section (37) formed on the steering handle upper part (9), wherein the steering handle upper part (9) is made of a plastic material in particular.

## Revendications

1. Appareil de travail guidé à la main tel qu'une tondeuse à gazon ou un appareil similaire, avec un carter (2) sur lequel sont montées plusieurs roues (4), et avec un guidon (5), fixé au carter (2), pour guider l'appareil de travail sur le sol, étant précisé que le guidon (5) est fixé au carter (2) au niveau d'une zone arrière (56), dans le sens de déplacement (57), dudit carter (2), et que le guidon (5) comprend un tube de guidage (7), étant précisé que le carter (2) comporte au moins un raidisseur (53) qui s'étend de la zone arrière (56) du carter (2) jusqu'à une zone avant (55) du carter (2), et étant précisé que le guidon (5) est relié au raidisseur (53),
**caractérisé en ce que** le guidon (5) comporte une console de fixation (6) qui est fixée au carter (2) dans la zone arrière (56) du carter (2) et qui est reliée au raidisseur (53), étant précisé que le tube de guidage (7) est relié à la console de fixation (6) par l'intermédiaire d'au moins un dispositif de rabattement amovible (10), étant précisé que le tube de guidage (7) est maintenu par serrage par complémentarité de forme sur le dispositif de rabattement (10) et que le dispositif de rabattement (10) comporte au moins une plaque de serrage (32) qui, dans la position serrée du dispositif de rabattement (10), est disposée par complémentarité de forme sur la console de fixation (6) et sur le tube de guidage (7), étant précisé que la console de fixation (6) et/ou le tube de guidage (7) sont déformés élastiquement.

2. Appareil de travail selon la revendication 1,
**caractérisé en ce que** le raidisseur (53) est relié par complémentarité de forme au guidon (5).

3. Appareil de travail selon la revendication 1 ou 2,
**caractérisé en ce qu'**il est prévu deux raidisseurs (53), qui forment avec le recouvrement (54) qui les relie un capot (52) de l'appareil de travail.

4. Appareil de travail selon l'une des revendications 1 à 3,
**caractérisé en ce que** la console de fixation (6) s'étend sur plus de trois quarts de la largeur (e) du carter (2) et est fixée à celui-ci près des deux côtés longitudinaux (41, 42) de l'appareil de travail.

5. Appareil de travail selon l'une des revendications 1 à 4,
**caractérisé en ce que** le guidon (5) est formé avec un bras unique, étant précisé que le tube de guidage (7) du guidon (5) s'étend sur un premier côté longitudinal (41) de l'appareil de travail.

6. Appareil de travail selon l'une des revendications 1 à 5,
**caractérisé en ce que** la force de serrage du dispositif de rabattement (10) est réglable.

7. Appareil de travail selon l'une des revendications 1 à 6,
**caractérisé en ce que** le tube de guidage (7), à son extrémité tournée vers la console de fixation (6), présente sur des côtés opposés des creux (36) pour deux plaques de serrage (32) du dispositif de rabattement (10), **en ce que** la console de fixation (6) comporte deux bras (30, 31) entre lesquels est formé un logement (29) pour l'élément de guidon inférieur (8) du tube de guidage (7) et sur lesquels les plaques de serrage (32) sont disposées par complémentarité de forme, et **en ce qu'**à l'intérieur du tube de guidage (7), dans la zone du dispositif de
rabattement (10), est disposé en particulier un élément raidisseur (76).

8. Appareil de travail selon l'une des revendications 1 à 7,
**caractérisé en ce que** le guidon (5) comprend un élément de guidon supérieur (9) d'une seule pièce, étant précisé que l'élément de guidon supérieur (9) comporte un conduit (64) qui traverse une section du tube de guidage rapportée sur l'élément de guidon supérieur (9), et la section à poignée (37) formée sur ledit élément de guidon supérieur (9), étant précisé que l'élément de guidon supérieur (9) est en particulier en matière plastique.
